Europäisches Patentamt

European Patent Office

Office européen des brevets

(11) Veröffentlichungsnummer : **0 137 889**
**B1**

(12) EUROPÄISCHE PATENTSCHRIFT

(45) Veröffentlichungstag der Patentschrift :
06.05.87

(21) Anmeldenummer : 84103486.1

(22) Anmeldetag : 29.03.84

(51) Int. Cl.⁴ : **F 16 B 13/04**

(54) Spreizdübel mit Ankerbolzen und damit verbundenen Spreizelementen.

(30) Priorität : 22.08.83 DE 3330278

(43) Veröffentlichungstag der Anmeldung :
24.04.85 Patentblatt 85/17

(45) Bekanntmachung des Hinweises auf die Patenterteilung : 06.05.87 Patentblatt 87/19

(84) Benannte Vertragsstaaten :
AT BE CH FR GB LI NL SE

(56) Entgegenhaltungen :
EP-A- 0 087 648
DE-A- 2 606 337
DE-A- 2 809 644
DE-A- 3 049 151
GB-A- 2 126 681
US-A- 3 427 919
US-A- 3 667 341

(73) Patentinhaber : HILTI Aktiengesellschaft
FL-9494 Schaan (LI)

(72) Erfinder : Herb, Armin
Lärchenstrasse 9
D-8123 Peissenberg (DE)

(74) Vertreter : Wildl, Roland
Hilti Aktiengesellschaft Patentabteilung
FL-9490 Schaan (LI)

## Beschreibung

Die Erfindung betrifft einen Spreizdübel, bestehend aus einem Ankerbolzen und wenigstens zwei Spreizelementen, wobei der Ankerbolzen in seinem rückwärtigen Bereich Lastangriffsmittel und in seinem vorderen Bereich axial und radial zueinander versetzt angeordnete, gegen das vordere Ende in der Tiefe abnehmende Ausnehmungen zur Aufnahme der Spreizelemente aufweist (US-A-3 427 919).

Spreizdübel der genannten Art werden wegen ihrer Vorteile, wie einfacher Aufbau, wirtschaftliche Herstellbarkeit, problemloser Setzvorgang, möglicher Durchsteckmontage usw, für viele Befestigungen verwendet. Bei Belastung weisen diese Spreizdübel ein Nachspreizverhalten auf. Dies bedeutet, dass die beim Setzvorgang erzielte Verspreizung des Dübels im Bohrloch unter Belastung des Dübels noch verstärkt wird.

Die bekannten Spreizdübel weisen den Nachteil auf, dass das maximal mögliche radiale Aufweitmass relativ gering ist. Insbesondere bei Befestigungen in der Zugzone eines Bauteils, wo Risse vorhanden sein können, entsteht aufgrund des zu geringen Aufweitmasses das Problem, dass keine ausreichende Nachspreizung eintritt und dadurch Ausfälle entstehen. Massnahmen zum Vergrössern des radialen Aufweitmasses, beispielsweise durch Vertiefen von Ausnehmungen für die Spreizelemente, reduzieren den Querschnitt des Ankerbolzens. Wird dieser reduzierte Querschnitt geringer als der Kernquerschnitt eines als Aussengewinde ausgebildeten Lastangriffsmittels, so erfolgt bei einer allfälligen Ueberbelastung des Dübels ein Bruch des Ankerbolzens im Spreizbereich.

Um eine solche Schwächung des Ankerbolzens zu vermeiden, ist es bekannt, die einzelnen Spreizelemente zueinander axial versetzt anzuordnen. Insbesondere bei Spreizdübeln, welche zur Verankerung in Leichtbaustoffen oder in Ziegelmauerwerk vorgesehen sind, ist der Ankerbolzen vorzugsweise über seine gesamte, sich in verankertem Zustand im Bereich des Aufnahmematerials befindende Einbaulänge mit Ausnehmungen für die Spreizelemente versehen.

Für eine gleichmässige Verteilung des Spreizdruckes sowie für ein Nachspreizen im gesamten Spreizbereich ist es erforderlich, dass beim Setzvorgang alle Spreizelemente gleichzeitig in ihre Spreizposition gelangen.

Der Erfindung liegt die Aufgabe zugrunde, einen aus einem Ankerbolzen und wenigstens zwei Spreizelementen bestehenden Spreizdübel zu schaffen, bei dem ein gleichzeitiges Spreizen der Spreizelemente gewährleistet ist.

Gemäss der Erfindung wird dies dadurch erreicht, dass die Spreizelemente über Stege miteinander verbunden sind und der Ankerbolzen der Aufnahme der Stege dienende Aussparungen aufweist, deren axiale Erstreckung die axiale Erstreckung der Stege übersteigt.

Durch das Verbinden der Spreizelemente über Stege wird verhindert, dass ein oder mehrere Spreizelemente beim Setzvorgang in ihrer Ausgangslage bleiben und keine Vorspreizung zustande kommt. Dadurch, dass die axiale Erstreckung der Aussparungen am Ankerbolzen die axiale Erstreckung der Stege übersteigt, bleibt die axiale Verschiebbarkeit der Spreizelemente gegenüber dem Ankerbolzen erhalten. Das Uebermass der Aussparung gegenüber der axialen Erstreckung der Stege ist vorzugsweise wenigstens so gross wie der vorgesehene Spreizweg der Spreizelemente.

Die Stege können im Prinzip radial oder schräg zur Längsachse des Ankerbolzens verlaufen. Für eine günstige Kraftübertragung verlaufen die Stege zweckmässigerweise im wesentlichen axial. Die Stege werden somit beim Spreizvorgang lediglich auf Zug oder Druck beansprucht und können im Querschnitt relativ klein dimensioniert werden. Die Stege können auch so dimensioniert werden, dass sie beim Nachspreizen unter einer bestimmten Belastung zerstört werden.

Für eine günstige Verteilung des Spreizdruckes ist es vorteilhaft, wenn die Spreizelemente im wesentlichen schalenförmig ausgebildet sind. Eine schalenförmige Ausbildung der Spreizelemente erleichtert auch das Verbinden der Spreizelemente mit dem Dübelkörper.

Zum Verbinden der Spreizelemente mit dem Dübelkörper erstrecken sich gemäss einem weiteren Vorschlag der Erfindung die Spreizelemente bzw Ausnehmungen am Ankerbolzen etwa über einen Drittel des Umfanges. Werden beispielsweise zwei Spreizelemente vorgesehen, die sich je etwa über ein Drittel des Umfanges erstrecken, so erstrecken sie sich zusammen über mehr als die Hälfte des Umfanges, auch wenn sie sich teilweise in Umfangsrichtung überlappen. Dabei bleibt jedoch der von einem einzelnen, sich über mehr als die Hälfte des Umfanges erstreckenden Spreizelement her bekannte negative Klemmeffekt aus. Werden beispielsweise drei Spreizelemente vorgesehen, so erfolgt die Verspreizung des Spreizdübels gleichmässig nach drei Seiten.

Im Prinzip können die Spreizelemente als Stanzteil aus einem Blech von konstanter Dicke hergestellt werden. Um eine Parallelspreizung zu erreichen, verjüngen sich die Spreizelemente vorteilhafterweise gegen das vordere Ende im Querschnitt. Eine solche Querschnittsverjüngung kann an den Spreizelementen auch nachträglich angebracht werden. Die Querschnittsverjüngung der Spreizelemente entspricht vorzugsweise der Verjüngung der Ausnehmung am Ankerbolzen.

Die Erfindung soll nachstehend anhand der sie beispielsweise wiedergebenden Zeichnungen näher erläutert werden. Es zeigen :

Figur 1 einen erfindungsgemässen Spreizdübel, in nicht gespreiztem Zustand,

Figur 2 einen Querschnitt durch den Spreizdübel gemäss Fig. 1, entlang der Linie II-II,

Figur 3 den Ankerbolzen des Spreizdübels gemäss Fig. 1, ohne Spreizelement,

Figur 4 ein Spreizelement zu einem Spreizdübel gemäss Fig. 1.

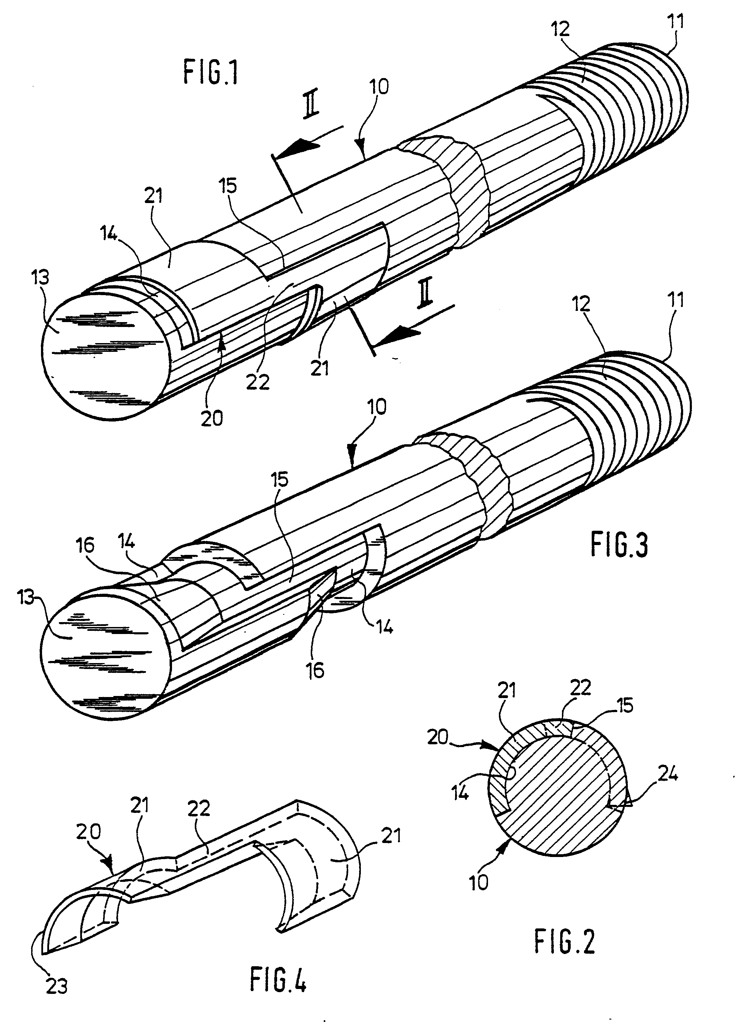

Der aus den Figuren 1 bis 4 ersichtliche Spreizdübel besteht aus einem insgesamt mit 10 bezeichneten Ankerbolzen und einem insgesamt mit 20 bezeichneten Spreizelement. Das Spreizelement 20 besteht aus zwei Schalen 21, die über einen axial verlaufenden Steg 22 miteinander verbunden sind. Das rückwärtige Ende 11 des Ankerbolzens 10 ist beispielsweise mit einem Aussengewinde 12 zur Lastaufnahme versehen. Im Bereich des vorderen Endes 13 sind Ausnehmungen 14 für das Spreizelement 20 angeordnet. Die Ausnehmungen 14 sind durch eine Aussparung 15 für den Steg 22 des Spreizelementes 20 miteinander verbunden.

Wie insbesondere aus Fig. 2 ersichtlich ist, erstrecken sich die Schalen 21 des Spreizelementes 20 etwa je über einen Drittel des Umfanges. Um beim Anziehen einer auf das Aussengewinde 12 aufgeschraubten Mutter ein Mitdrehen des Ankerbolzens 10 zu verhindern, ist die eine der beiden Schalen 21 mit einem den Ankerbolzen 10 radial überragenden Vorsprung 24 versehen.

Fig. 4 zeigt, dass sich die Schalen 21 des Spreizelementes 20 gegen dessen vorderes Ende 23 verjüngen. Entsprechend dieser Ausbildung des Spreizelementes 20 nehmen auch die Ausnehmungen 14 am Ankerbolzen 10 gegen das vordere Ende 13 in der Tiefe ab. Diese Ausbildung des Spreizelementes 20 und des Ankerbolzens 10 ermöglicht eine Parallelspreizung. Da die beiden Schalen 21 des Spreizelementes 20 zusammen den Ankerbolzen 10 um mehr als 180° umgreifen, werden keine zusätzlichen Mittel zur Halterung des Spreizelementes 20 am Ankerbolzen 10 benötigt. Durch das Verbinden der Schalen 21 mittels des Steges 22 wird sichergestellt, dass beim Spreizvorgang beide Schalen 21 gleichzeitig in die Spreizstellung gelangen.

Anstelle der dargestellten zwei Schalen 21 können bei grösserer Verankerungslänge auch drei oder mehr Schalen vorgesehen werden. Ein wesentlicher Vorteil dieser Anordnung der Schalen 21 am Ankerbolzen 10 besteht darin, dass der Restquerschnitt des Ankerbolzens 10 in jedem Bereich der Spreizzone grösser ist als der Kernquerschnitt des Aussengewindes 12. Bei Ueberbelastung des Dübels reisst dieser somit nicht im Spreizbereich, sondern im Bereich des Aussengewindes 12.

Die Ausnehmungen 14 am Ankerbolzen 10 können, wie aus Fig. 3 ersichtlich ist, eine einstufige Auflauffläche 16 für die Spreizelemente 20 aufweisen. Um insbesondere bei Anwendungen in gerissenen Zugzonen eines Bauteils ein günstigeres Auszugsverhalten zu erreichen, können die Auflaufflächen 16 jedoch auch mehrstufig gestaltet werden, wobei die Neigung der Auflauffläche 16 vorzugsweise gegen das vordere Ende 13 des Ankerbolzens 10 hin zunimmt.

## Patentansprüche

1. Spreizdübel bestehend aus einem Ankerbolzen (10) und wenigstens zwei Spreizelementen (20), wobei der Ankerbolzen in seinem rückwärtigen Bereich Lastangriffsmittel (12) und in seinem vorderen Bereich axial und radial zueinander versetzt angeordnete, gegen das vordere Ende (13) in der Tiefe abnehmende Ausnehmungen (14) zur Aufnahme der Spreizelemente aufweist, dadurch gekennzeichnet, dass die Spreizelemente (20) über Stege (22) miteinander verbunden sind und der Ankerbolzen (10) der Aufnahme der Stege (22) dienende Aussparungen (15) aufweist, deren axiale Erstreckung die axiale Erstreckung der Stege (22) übersteigt.

2. Spreizdübel nach Anspruch 1, dadurch gekennzeichnet, dass die Stege (22) im wesentlichen axial verlaufen.

3. Spreizdübel nach Anspruch 1 oder 2, dadurch gekennzeichnet, dass die Spreizelemente (20) im wesentlichen schalenförmig ausgebildet sind.

4. Spreizdübel nach Anspruch 3, dadurch gekennzeichnet, dass die Spreizelemente (20) bzw Ausnehmungen (14) am Ankerbolzen (10) sich etwa über einen Drittel des Umfanges erstrecken.

5. Spreizdübel nach einem der Ansprüche 1 bis 4, dadurch gekennzeichnet, dass sich die Spreizelemente (20) gegen das vordere Ende (13) im Querschnitt verjüngen.

## Claims

1. An expansible dowel consisting of an anchor bolt (10) and at least two expansion elements (20), in which the anchor bolt has, in its rearward region, load application means (12) and, in its front region, recesses (14), arranged staggered axially and radially relative to one another and decreasing in depth towards the front end (13), for the reception of the expansion elements, characterised in that the expansion elements (20) are connected to one another by way of webs (22) and the anchor bolt (10) has cutouts (15) which serve for the reception of the webs (22) and the axial extent of which exceeds the axial extent of the webs (22).

2. An expansible dowel according to claim 1, characterised in that the webs (22) extend substantially axially.

3. An expansible dowel according to claim 1 or 2, characterised in that the expansion elements (20) are substantially dish-shaped in design.

4. An expansible dowel according to claim 3, characterised in that the expansion elements (20) or respectively recesses (14) on the anchor bolt (10) extend approximately over one-third of the circumference.

5. An expansible dowel as claimed in one of claims 1 to 4, characterised in that the expansion elements (20) taper in cross-section towards the front end (13).

## Revendications

1. Cheville expansible avec un boulon d'ancrage (10) et au moins deux éléments d'expansion (20), le boulon d'ancrage (10) présentant dans sa région postérieure des organes d'application de la charge (12) et, dans sa région antérieure, des creux (14) pour le logement des éléments d'expansion, qui sont disposés avec un décalage axial et radial les uns par rapport aux autres et dont la profondeur diminue en direction de l'extrémité antérieure (13), caractérisée en ce que les éléments d'expansion (20) sont reliés entre eux par des barrettes (22) et que le boulon d'ancrage (10) comporte des évidements (15) destinés à recevoir les barrettes (22) et dont l'extension axiale est supérieure à l'extension axiale des barrettes (22).

2. Cheville expansible selon la revendication 1, caractérisée en ce que les barrettes (22) s'étendent essentiellement dans le sens axial.

3. Cheville expansible selon l'une des revendications 1 ou 2, caractérisée en ce que les éléments d'expansion (20) sont réalisés essentiellement sous forme de coquilles.

4. Cheville expansible selon la revendication 3, caractérisée en ce que les éléments d'expansion (20) et respectivement les creux (14) sur le boulon d'ancrage (10) s'étendent sur environ un tiers de la circonférence.

5. Cheville expansible selon l'une des revendications 1 à 4, caractérisée en ce que la section des éléments d'expansion (20) se rétrécit en direction de l'extrémité antérieure (13).

FIG.1

FIG.3

FIG.2

FIG.4